# EUROPÄISCHE PATENTANMELDUNG

(11) **EP 4 542 373 A1**
(43) Veröffentlichungstag der Anmeldung: **23.04.2025**
(21) Anmeldenummer: 23204628.4
(22) Anmeldetag: 19.10.2023
(51) Int. Cl.: G06F 8/30, G06F 8/75, G06F 11/36

(54) **VERFAHREN ZUR VERIFIZIERUNG STATISCHER WARNUNGEN VON LLM-GENERIERTEM CODE MIT GERICHTETEM FUZZING**

(71) Anmelder: Robert Bosch GmbH, 70442 Stuttgart (DE)
(72) Erfinder: Schlund, Maximilian, 71034 Boeblingen (DE); Quante, Jochen, 71640 Ludwigsburg (DE); Woehrle, Matthias, 74321 Bietigheim-Bissingen (DE); Huth, Christopher, 74076 Heilbronn (DE); Hecking-Harbusch, Jesko, 71229 Leonberg (DE); Sierra Loaiza, Sebastian Ernesto, 04107 Leipzig (DE)

(57) **Zusammenfassung**

Verfahren (10) zur Verifizierung statischer Warnungen von mittels eines Sprachmodells (22) generiertem Code, mit den Schritten:
- Bereitstellen (11) einer ausführbaren Datei (43) aus einem Programmcode (23), der mittels eines Sprachmodells (22) generiert wurde,
- Bereitstellen (12) von Warnstellen (41) in dem Programmcode (23), die von statischen Tests stammen,
- Ausführen (13) von gerichtetem Fuzzing durch einen Fuzzer (28, 42), wobei der Fuzzer (28, 42) Eingaben in die ausführbare Datei (43) injiziert, um eine Warnstelle zu erreichen,
- Überwachen (14) des Verhaltens und der Ausgabe der ausführbaren Datei (43),
- Bewerten (15) der Warnstelle anhand des Verhaltens und der Ausgabe.

## Beschreibung

### Stand der Technik

Zunehmend wird Programmcode mit Sprachmodellen wie Large Language Models (LLMs) erzeugt. Dies kann zum Beispiel im Rahmen einer Sprachübersetzung beziehungsweise automatisierten Programmcode Übersetzung oder einer Code Refaktorierung geschehen.

Die Verwendung von Ansätzen zur automatisierten Codegenerierung zum Beispiel aus LLMs bringt immer Herausforderungen mit sich, so gibt es keine Garantie für die Korrektheit des Codes und keine Garantie für Leistungsverbesserungen. Es können zum Beispiel Verbesserungen für kleine Codefragmente generiert werden, aber dieser Ansatz ist für größere Codebasen nicht praktikabel.

Die Arbeit mit größeren Codebasen verschlechtert die Verwendbarkeit bestimmter statischer Methoden, z. B. der abstrakten Interpretation, da Korrektheitsgarantien nicht in angemessener Zeit berechnet werden können oder eine Annäherung erforderlich ist, die dann zu Überapproximationsfehlern führt. Außerdem sind statische Methoden kaum für die Messung der Softwareleistung, z. B. der Laufzeit, geeignet.

Der größte Nachteil statischer Methoden, die "sound" sind (d.h. garantiert nichts übersehen), vor allem wenn sie zum ersten Mal in ein Softwareprojekt eingeführt werden, besteht darin, dass eine Vielzahl von Warnungen auftauchen, die alle behoben oder als falsch positiv gekennzeichnet werden müssen. Dies kann nicht durch die statische Methode selbst verhindert werden, da sie sonst ihre Soundness (100% recall) verlieren würde.

### Offenbarung der Erfindung

Ein erster allgemeiner Aspekt der vorliegenden Offenbarung betrifft ein Verfahren zur Verifizierung statischer Warnungen von mittels eines Sprachmodells generiertem Code.

Das Verfahren umfasst
- Bereitstellen einer ausführbaren Datei aus einem Programmcode, der mittels eines Sprachmodells generiert wurde,
- Bereitstellen von Warnstellen in dem Programmcode, die von statischen Tests stammen,
- Ausführen von gerichtetem Fuzzing durch einen Fuzzer, wobei der Fuzzer Eingaben in die ausführbare Datei injiziert, um eine Warnstelle zu erreichen,
- Überwachen des Verhaltens und der Ausgabe der ausführbaren Datei,
- Bewerten der Warnstelle anhand des Verhaltens und der Ausgabe.

Ein zweiter allgemeiner Aspekt der vorliegenden Offenbarung betrifft ein Verfahren zum Trainieren eines Sprachmodells eingerichtet zur automatisierten Generierung von Programmcode.

Das Verfahren umfasst
- Eingeben eines Source-Codes in ein Sprachmodell und erzeugen eines Programmcodes,
- Verifizieren des Programmcodes mit dem Verfahren gemäß dem ersten allgemeinen Aspekt,
- Erzeugen einer Belohnung für das Sprachmodell, wobei die Belohnung auf dem Bewerten der Warnstelle anhand des Verhaltens und der Ausgabe basiert,
- Aktualisieren von Gewichten des Sprachmodells mit dem Wert der Belohnung.

Ein dritter allgemeiner Aspekt der vorliegenden Offenbarung betrifft ein Computersystem, das dafür ausgelegt ist, das Verfahren gemäß dem ersten und/oder dem zweiten allgemeinen Aspekt (oder einer Ausführungsform davon) auszuführen.

Ein vierter allgemeiner Aspekt der vorliegenden Offenbarung betrifft ein Computerprogramm, das dafür ausgelegt ist, das Verfahren gemäß dem ersten allgemeinen Aspekt (oder einer Ausführungsform davon) auszuführen.

Ein fünfter allgemeiner Aspekt der vorliegenden Offenbarung betrifft ein computerlesbares Medium oder Signal, das das Computerprogramm gemäß dem vierten allgemeinen Aspekt (oder einer Ausführungsführungsform davon) speichert und/oder enthält.

Die Techniken des ersten, zweiten, dritten, vierten und fünften allgemeinen Aspekts können in manchen Situationen einen oder mehrere der folgenden Vorteile haben.

Die vorliegende Offenbarung verwendet gerichtetes Fuzzing, um Warnungen aus der statischen Codeanalyse zu validieren und löst damit einen der größten Nachteile der statischen Analyse, nämlich die schiere Menge der Warnungen. Damit können diese Warnungen automatisiert verarbeitet oder dynamisch überprüft werden, was viel manuelle Arbeit spart.

Die vorliegende Offenbarung ermöglicht bestehende Tests, nämlich unter anderem Unit-Tests zur Prüfung, ob die erzeugten Code-Patches funktionell korrekt sind, zu vermeiden, da hier Fuzzing verwendet wird. In der Realität decken Unit-Tests nicht alle Fälle der Software ab, und in einigen Fällen sind Unit-Tests überhaupt nicht verfügbar.

Normalerweise müssen Warnungen, die durch statische Methoden erzeugt werden, durch enorme manuelle Arbeit behoben werden. Fuzzing gemäß der vorliegenden Offenbarung ist gut geeignet, um Warnungen als echte Positivmeldungen zu entlarven, die wiederum vorrangig behandelt werden müssen.

Die vorliegende Offenbarung ermöglicht durch gezieltes Fuzzing den rechnerischen Testaufwand oder Fokus eines Testdurchlaufs auf Codestellen mit einer Warnung zu lenken. Dies spart Zeit und Energie im Vergleich zu einem allgemeinen, auf breiter Suche basierenden Fuzzing.

Die vorliegende Offenbarung ermöglicht die Abdeckung als Qualitätsmaßstab für generierten Code, was wiederum die Auswahl von besser generierten Code ermöglicht. Ein solcher Code von höherer Qualität ist dann leichter zu testen.

Es wird ein Verfahren oder ein System vorgeschlagen, das kontinuierlich Code generiert, diesen Code verifiziert, einem gerichtetem Fuzzing unterwirft und (mit einer Feedback-Schleife) weitere Generationen von generiertem Code verbessert.

Die vorliegende Offenbarung ist relevant für jedes Produkt, das auf automatisierten Tests basiert, insbesondere für dynamische Testmethoden, und jedes Produkt, das Legacy-Code oder Leistungsprobleme aufweist.

Einige Begriffe werden in der vorliegenden Offenbarung in folgender Weise verwendet.

Ein "Sprachmodell" kann insbesondere ein Large Language Model (LLM), neuronales Netz, Recurrent Neural Network (RNN), ein Transformer Model oder ein Codemodell als ein auf Code spezialisiertes Sprachmodell oder auch ein ganz allgemeines Sprachmodell, das auch Code umfasst, sein. Weiterhin umfasst sind Computersprachen, Codes wie Programmcodes einer Recheneinrichtung wie einem Computer. Die Sprache des Modells kann nicht nur natürliche Sprachen, sondern auch künstliche Sprachen wie zum Beispiel Programmiersprachen beinhalten.

"Refaktorierung" von Code (englisch: refactoring) bezeichnet in der SoftwareEntwicklung Strukturverbesserungen von Code unter Beibehaltung des beobachtbaren Programmverhaltens, d.h. der Funktionalität. Dabei sollen zum Beispiel Lesbarkeit, Verständlichkeit, Wartbarkeit und/oder Erweiterbarkeit verbessert werden, mit dem Ziel, den jeweiligen Aufwand für Fehleranalyse und/oder funktionale Erweiterungen zu senken. Typische Refaktorierungen sind z.B. Umbenennung von Variablen in selbsterklärende Namen und/oder die Extraktion von Codeteilen in eigene Methoden. Durch das Refaktorieren wird die Qualität des Codes, mithin der Software erhöht.

Das "Testen", "Prüfen" oder "Vergleichen des Ursprung-Programmcodes und des Ziel-Programmcodes" kann umfassen: eine formale Prüfung des gleichen Verhaltens des Ursprung-Programmcodes und des Ziel-Programmcodes zum Beispiel mittels Bounded Model Checking, Tests in der Ursprungssprache, Test auf Contracts in der Ursprungssprache und/oder syntaktischen und stilistischen Tests, Fuzzing, Mutation der Eingänge des Test-Harness, Ableitung aus Contracts der Ursprungssprache und/oder der Zielsprache und/oder Ableitung aus einem Sprachmodell.

Ein "Test-Harness" bzw. Testrahmen umfasst eine Sammlung von Software und Testdaten, die zum systematischen automatisierten Testen eines Programms unter verschiedenen Umgebungsbedingungen verwendet wird. Ein Test-Harness umfasst üblicherweise eine Testausführungs-Engine, welche für die Abarbeitung der Testlogik verantwortlich ist, und ein Testdaten-Repository oder Datenbank, welches die Testskripte, Testprogramme und sonstige Testressourcen beinhaltet. Hier wird der Test-Harness automatisiert erzeugt, indem zum Beispiel differenzierende Tests zu der Datenbank hinzugefügt werden. Der Start des Tests kann mit gegebenen oder vorgefertigten Tests aus der Test-Datenbank gestartet werden. Das System kann zudem Tests automatisch generieren.

Daten können hier Software Code inklusive Test cases und harnesses plus zusätzlichen (natürlich-sprachlichen) Beschreibungen von der Funktionsweise bzw. Gültigkeitsbereichen sein. Im Fall der Sprachübersetzung wird hier beispielhaft C als Source Sprache und Rust als Target Sprache beschrieben, es sind aber auch andere Kombinationen möglich. Die Übersetzung von C in Rust ist interessant, da Rust Features im Bereich sicherheitskritischer Systeme bietet, aber viel Legacy Code in anderen Sprachen, vor allem C vorhanden ist. Im Fall der Refaktorisierung sind Quell- und Zielsprache gleich.

"Contracts" sind Bestandteil einer vertragsbasierten Programmierung oder eines Entwurfs gemäß Vertrag ("Design by contract"). Dies ist ein Konzept der Softwareentwicklung mit dem Ziel eines optimierten Zusammenspiels einzelner Programmmodule durch die Definition formaler Verträge zur Verwendung von Schnittstellen, die über deren statische Definition hinausgehen.

Der Begriff "Codebasis" (englisch codebase) bezeichnet die Gesamtheit der zu einem Projekt gehörenden Quelltextdateien sowie eventuell dazugehöriger Konfigurationsdateien. Die Codebasis kann auch diverse andere Dateien, welche für den Vorgang des Kompilierens benötigt werden, z. B. sogenannte Makefiles, umfassen.

"Fuzzing" oder "Fuzz-Testing" ist der automatisierte Prozess des Sendens von zufällig generierten Eingaben von einem Fuzzer an ein Ziel oder Zielprogramm und des Beobachtens der Reaktion des Ziels.

Ein "Fuzzer" oder "Fuzzing-Engine" ist ein Programm, das automatisch Eingaben generiert. Sie sind also nicht zwingend mit der zu testenden Software verbunden, und es wird auch keine Instrumentierung durchgeführt. Sie haben jedoch die Fähigkeit, Code zu instrumentieren, Testfälle zu erzeugen und zu testende Programme auszuführen. Bekannte Beispiele sind afl und libfuzzer.

Ein "Fuzz-Target" ist ein Softwareprogramm oder eine Funktion, die durch Fuzzing getestet werden soll. Ein Hauptmerkmal eines Fuzz-Ziels ist, dass es sich um eine Binärdatei, eine Bibliothek, eine Anwendungsprogrammierschnittstelle (API) oder etwas anderes handelt, das Bytes als Eingabe verarbeiten kann.

"Glue-Code", "Wrapper", "Harness" oder "Fuzz-Treiber" verbinden einen Fuzzer mit einem Fuzz-Ziel.

Ein "Fuzz Test" ist die kombinierte Version eines Fuzzers und eines Fuzz-Targets. Ein Fuzz-Target kann dann instrumentierter Code sein, an dessen Eingaben ein Fuzzer angeschlossen ist. Ein Fuzz Test ist ausführbar. Der Fuzzer kann auch mehrere laufende Fuzz-Tests starten, beobachten und stoppen (in der Regel Hunderte oder Tausende pro Sekunde), jeder mit einer etwas anderen, vom Fuzzer erzeugten Eingabe

Ein "Testfall" ist eine bestimmte Eingabe und ein bestimmter Testdurchlauf aus einem Test Harness oder einem Fuzz Test. Um die Reproduzierbarkeit zu gewährleisten, werden interessante Durchläufe (Finden neuer Codepfade oder Abstürze) gespeichert.

Eine "Instrumentierung" wird verwendet, um die Abdeckungsmetrik beobachtbar zu machen, z. B. während der Kompilierung. Instrumentierung ist das Einfügen von Anweisungen in ein Programm, um eine Rückmeldung über die Ausführung zu erhalten. Sie wird meist durch den Compiler realisiert und kann z.B. die erreichten Codeblöcke während der Ausführung beschreiben.

Coverage-guided Fuzzing verwendet Code-Coverage-Informationen als Feedback während des Fuzzings, um zu erkennen, ob eine Eingabe die Ausführung neuer Code-Pfade/Blöcke verursacht hat.

Beim "mutationsbasierten Fuzzing" werden neue Eingaben erstellt, indem eine Reihe bekannter Eingaben (Korpus) verwendet und zufällig Mutationen auf sie angewendet werden.

Beim "generationsbasierten Fuzzing" werden neue Eingaben von Grund auf neu erstellt, z. B. durch die Verwendung von Eingabemodellen oder Eingabegrammatiken.

"Mutator" ist eine Funktion, die Bytes als Eingabe nimmt und eine kleine Zufallsmutation der Eingabe ausgibt.

Ein "Korpus" (Plural: Korpora) ist ein Satz von Eingaben. Initiale Eingaben sind Seeds.

### Kurzbeschreibung der Figuren

**Fig. 1** ist ein Flussdiagramm, das die Techniken der vorliegenden Offenbarung zur Verifizierung statischer Warnungen illustriert.
**Fig. 2** zeigt schematisch ein System, in dem die Techniken der vorliegenden Offenbarung zur Verifizierung statischer Warnungen eingesetzt werden können.
**Fig. 3** zeigt schematisch ein Fuzzingsystem, in dem die Techniken der vorliegenden Offenbarung zur Verifizierung statischer Warnungen eingesetzt werden können.
**Fig. 4** zeigt schematisch ein System, in dem die Techniken der vorliegenden Offenbarung zur Verifizierung statischer Warnungen eingesetzt werden können.
**Fig. 5** ist ein Flussdiagramm, das die Techniken der vorliegenden Offenbarung zum Trainieren eines Sprachmodells illustriert.

### Detaillierte Beschreibung

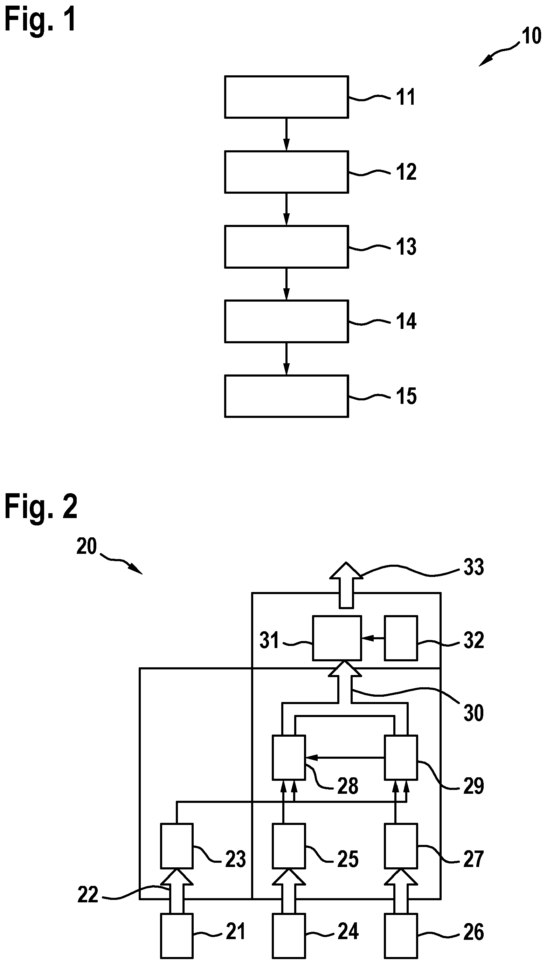

Fig. 1 ist ein Flussdiagramm, das ein Verfahren 10 zur Verifizierung statischer Warnungen von mittels eines Sprachmodells generiertem Code. Der generierte Code wird gemäß Fig. 1 in einer automatisierten Programmcode Übersetzung von einer Ursprungssprache in eine Zielsprache erzeugt. Alternativ kann der Programmcode per Code Refaktorierung erzeugt werden.

Das in dieser Offenbarung vorgeschlagene Verfahren 10 ist zur Verifizierung statischer Warnungen von mittels eines Sprachmodells generiertem Code einer Software gerichtet. Die Software kann dafür ausgelegt sein, ein technisches System, insbesondere ein cyber-physisches System, insbesondere mindestens eine Recheneinheit eines Fahrzeugs, zu steuern, zu regeln und/oder zu überwachen. Insbesondere kann die Software eine embedded Software sein, die dafür ausgelegt ist, auf einem eingebetteten (d.h. z.B. aufgabenspezifischen) System ausgeführt werden.

In einem ersten Schritt erfolgt ein Bereitstellen 11 einer ausführbaren Datei aus einem Programmcode, der mittels eines Sprachmodells generiert wurde. Das Bereitstellen umfasst sowohl lediglich die Eingabe eines Programmcodes oder einer bereits kompilierten Datei in das Verfahren beziehungsweise das System als auch die Inkludierung der Erzeugung beziehungsweise des Sprachmodells in das Verfahren beziehungsweise das System. Das Bereitstellen kann weiterhin umfassen, dass zum Beispiel ein Fuzzer den Programmcode für gerichtetes Fuzzing instrumentiert. Die Verifizierung statischer Warnungen beziehungsweise das gerichtete Fuzzing kann asynchron zu der Generierung des Programmcodes und auch kontinuierlich laufen. Alternativ kann das Fuzzing auch nach den statischen Prüfungen gestartet werden. Wenn das Sprachmodell den ersten Code generiert oder wenn es neuere Versionen gibt, wird die ausführbare Datei kompiliert und für gezieltes Fuzzing instrumentiert.

Es erfolgt ein Bereitstellen 12 von Warnstellen in dem Programmcode, die von statischen Tests stammen. Statische Tests oder Prüfungen können zum Beispiel umfassen:
- Contracts werden entweder vorgegeben oder aus dem Systemumfeld extrahiert.
- Im Fall von Rust können statische Prüfungen auch durch den Compiler bereitgestellt werden, in anderen Sprachen z.B. auch durch Unter etc.
- Bounded model checking und/oder abstrakte Interpretation, realisiert in kommerziellen Tools wie z.B. Astrée oder Open-Source-tools wie z.B. CBMC.
- Automatischer Aufbau eines Bounded Model Checking Setups, das Ziel-Programmcode statisch gegen gegebene Contracts vergleicht.
- Automatischer Aufbau eines Abstract Interpretation Setups, das Ziel-Programmcode statisch gegen gegebene Contracts vergleicht.
- Automatischer Aufbau eines Bounded Model Checking Setups, das Ursprung-Programmcode und Ziel-Programmcode auf funktionale Gleichheit prüft.

Diese beiden Bereitstellungen können parallel oder in beliebiger Reihenfolge geschehen. Dynamische Vorgänge sind ebenfalls möglich, bei denen die Bereitstellungen teilweise aktualisiert werden.

Es schließt sich ein Ausführen 13 von gerichtetem Fuzzing durch einen Fuzzer an, wobei der Fuzzer Eingaben in die ausführbare Datei injiziert, um eine Warnstelle zu erreichen. Gerichtetes Fuzzing kann in einer Grey-Box Umgebung eingesetzt werden, so dass leichtgewichtige Beobachtungen das Fuzzing leiten können. Eine Blackbox-Einstellung ist ebenfalls möglich (z. B. Debugger-gesteuertes Fuzzing), kann aber weniger performant sein.

Anders ausgedrückt, versucht der Fuzzer Eingaben für die ausführbare Datei zu generieren, um eine Warnstelle zu erreichen, die aus der Menge der von statischen Tests oder Prüfungen generierten Warnstellen ausgewählt wird.

Es folgt ein Überwachen 14 des Verhaltens und der Ausgabe des Programmcodes. Dabei werden zum Beispiel Unstimmigkeiten, schlechteres Laufzeitverhalten oder Bugs erkannt. Das Verhalten des Programmcodes kann die tatsächliche Laufzeit pro Testfall umfassen.

Anschließend erfolgt ein Bewerten 15 der Warnstelle anhand des Verhaltens und der Ausgabe. Das Bewerten kann wie folgt vorgenommen werden:
Wenn die Warnstelle nicht innerhalb eines angemessenen Testintervalls erreicht wird, z. B. durch eine feste Zeitüberschreitung oder eine andere Abdeckung, dann sollte die Warnung eine niedrige Punktzahl erhalten. Eine niedrige Bewertung zeigt an, dass die Warnstelle in einer dynamischen Umgebung schwer zu erreichen ist.

Immer wenn die Warnstelle erreicht wird und eine angemessene Anzahl von Testfällen diese Warnstelle auslöst, sollte die Warnung eine niedrige Bewertung erhalten. Eine niedrige Bewertung zeigt an, dass die Warnstelle in einer dynamischen Umgebung schwer auszulösen ist. Dies muss keine Garantie für die Abwesenheit von Fehlern sein.

Immer wenn die Warnstelle erreicht und ein Fehler an dieser Warnstelle gefunden wird, wird die Warnung eine hohe Punktzahl erhalten. Eine hohe Bewertung zeigt an, dass es sich bei der Warnstelle um einen echten positiven Fund mit sehr hoher Wahrscheinlichkeit handelt. Sanitizer wie Adress-Sanitizer oder Memory-Sanitizer können mehr Bugs für den Fuzzer sichtbar machen.

In allen anderen Fällen kann die Standardbewertung für Warnstellen mittel sein.

Gemäß einer Ausführungsform umfasst das Verfahren weiterhin, dass ein Korpus mit Eingaben für den Fuzzer bereitgestellt wird, der anfängliche Testfälle aus Code-Repositories des Programmcodes und/oder aus bereitgestellten Tests und Test Harnesses enthält.

Gemäß einer Ausführungsform umfasst das Verfahren weiterhin, dass eine niedrige Bewertung erfolgt, wenn die Warnstelle beim Fuzzing nicht erreicht wird und/oder wenn die Warnstelle beim Fuzzing erreicht wird aber dort kein Fehler gefunden wird, wobei eine hohe Bewertung erfolgt, wenn die Warnstelle beim Fuzzing erreicht wird und dort ein Fehler gefunden wird.

Gemäß einer Ausführungsform umfasst das Verfahren weiterhin, dass der Programmcode ausgegeben wird, wenn das Überwachen keine Anomalien ergeben hat, und wobei anderenfalls eine Ausgabe erzeugt wird, die statische Prüfwarnungen mit der Bewertung umfasst.

Die Ausgabe kann dann eine geordnete Liste (oder ein beschrifteter Satz) von statischen Prüfwarnungen mit ihrer jeweiligen Priorität sein. Wenn das Fuzzing keine Unstimmigkeiten, schlechteres Laufzeitverhalten oder Bugs gefunden hat, wird der generierte Code ausgegeben. Das Fuzzing kann auch beendet werden, wenn alle Warnstellen versucht wurden zu erreichen oder wenn es eine Überschreitung einer vorgegebenen Zeitspanne gibt.

Gemäß einer Ausführungsform umfasst das Verfahren weiterhin, dass das Verhalten der ausführbaren Datei, die Ausgabe der ausführbaren Datei und/oder die Bewertung der Warnstelle an den Fuzzer zurückgeführt wird.

Gemäß einer Ausführungsform umfasst das Verfahren weiterhin, dass der Programmcode oder Teile des Programmcodes unter Verwendung des Verhaltens des Programmcodes, der Ausgabe des Programmcodes und/oder der Bewertung der Warnstelle aktualisiert wird und wobei der aktualisierte Programmcode optional als Eingabe für das Sprachmodell zurückgeführt wird.

Alternativ zu dem beschriebenen Übersetzen kann ein Refaktorieren des Programmcodes vorgesehen sein. Das Refaktorieren des Programmcodes kann Ändern des Programmcodes umfassen oder sein. Der refaktorierte Programmcode kann ebenfalls wieder ein Code der Software, insbesondere ein Quellcode der Software sein.

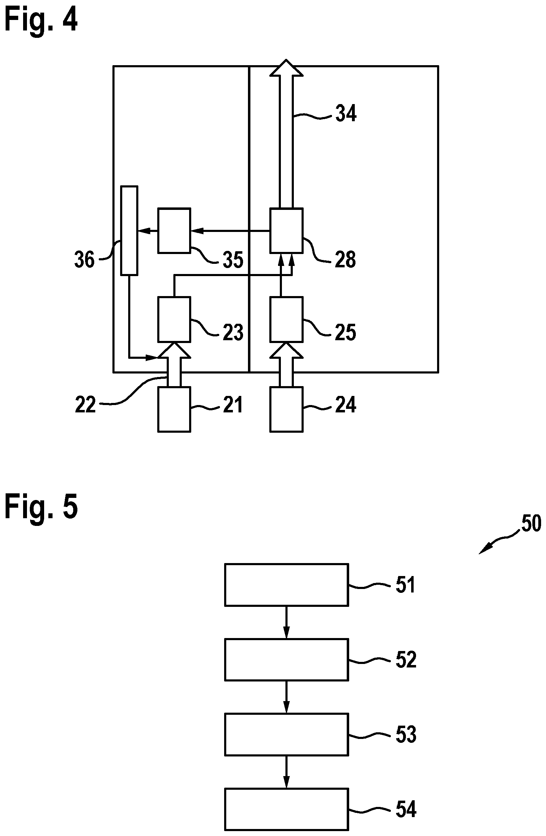

Fig. 2 zeigt schematisch ein Computersystem 20, in dem die Techniken der vorliegenden Offenbarung zur Verifizierung statischer Warnungen von mittels eines Sprachmodells generiertem Code eingesetzt werden können. Das Computersystem 20 ist dafür ausgelegt, das Verfahren 10 gemäß Fig. 1 und das Verfahren 50 gemäß Fig. 5 auszuführen. Das Computersystem 20 kann in Hard- und/oder Software realisiert sein. Entsprechend kann das in Figur 2 gezeigte System als Computerprogramm angesehen werden, das dazu ausgelegt ist, das Verfahren 10 gemäß Fig. 1 und das Verfahren 50 gemäß Fig. 5 auszuführen.

Ein Ursprung-Programmcode 21 in einer Ursprungssprache wie zum Beispiel C wird einem Sprachmodell 22 wie zum Beispiel einem Large Language Model (LLM) zur Übersetzung in eine Zielsprache wie zum Beispiel Rust zur Verfügung gestellt. Das Sprachmodell 22 erzeugt einen (Ziel) Programmcode 23 als Übersetzung des Ursprung-Programmcodes 21. Dieser Bereich des Computersystems 20 kann als Erzeugungsbereich bezeichnet werden.

Das Sprachmodell ist zum Beispiel ein Large Language Model (LLM) in welches per Eingabe (Prompt) Daten wie hier ein Programmcode zusammen mit einer Fragestellung wie hier einer Übersetzungs- oder Refaktorisierungsanfrage eingegeben werden.

Eine weitere Eingabe 24 in das System 20 sind Tests und optional ein Test-Harness in der Ursprungssprache. Alternativ oder optional können die Tests und/oder der Test-Harness in der Zielsprache vorliegen. Diese Eingaben werden einem Test-Harness 25 zugeführt. Der Test-Harness 25 nimmt Funktionen oder Tests in der Zielsprache auf.

Optional können statische Tests, Qualitätsbewertungen und/oder Contracts 26 einer statischen Testeinheit 27 zugeführt werden. Dort werden diese für spätere Überprüfungen des Programmcodes 23 verwaltet.

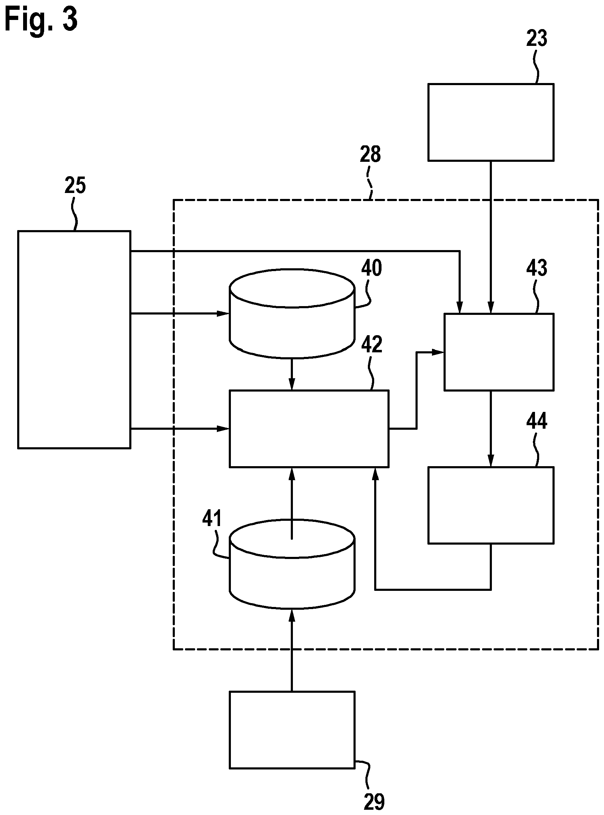

Eingänge eines Fuzzers 28 für gerichtetes Fuzzing sind mit dem Sprachmodell 22 zur Eingabe des Programmcodes 23 und mit dem Test-Harness 25 zur Eingabe von Testroutinen verbunden. In dem Fuzzer 28 wird der Programmcode 23 basierend auf dem Test-Harness 25 mit dem Ursprung-Programmcode 21 getestet, insbesondere werden statische Warnungen verifiziert. Der Fuzzer 28 und dessen Funktion sind im Zusammenhang mit Fig. 3 detaillierter beschrieben.

Die Generierung des Programmcodes 23 durch das Sprachmodell 22 kann wiederholt erfolgen mit geänderten Bedingungen, wie Änderung eines oder mehrerer Hyperparameter wie einem Temperatur-Parameter des Sprachmodells, Transformationen im Ursprung-Programmcode und/oder Änderungen in der Eingabe an das Sprachmodell wie zum Beispiel Änderungen in den Aufgaben oder Prompts. Zudem können Variablen im Code umbenannt werden.

Durch diese Maßnahmen wird eine Varianz erzeugt. Diese Varianz erlaubt eine Verifikation sowie eine verbesserte Qualitätsbewertung der erzeugten Übersetzungen und zudem ein Trainieren des Sprachmodells mittels einer Rückkopplung. Im Rahmen der verbesserten Qualitätsbewertung kann festgestellt werden, welche der erzeugten Programmcodes 23 besser oder schlechter geeignet sind. Der Fuzzer 28 arbeitet dann mit diesen Varianten der Programmcodes 23.

Eingänge einer Überprüfungs-Einheit 29 sind mit dem Sprachmodell 22 zur Eingabe des Programmcodes 23 und mit der statischen Testeinheit 27 zur Eingabe von statischen Tests, Qualitätsbewertungen und/oder Contracts 26 verbunden. In der zweiten Überprüfungs-Einheit 29 wird der Programmcode 21 mittels der statischen Tests, Qualitätsbewertungen und/oder Contracts 26 überprüft.

Wenn die Überprüfungen in dem Fuzzer 28 und in der Überprüfungs-Einheit 29 erfolgreich abgeschlossen sind, wird eine Statusmeldung 30 ausgegeben, dass der Programmcode 23 in Ordnung ist. Dieser Bereich des Computersystems 20 kann als Überprüfungsbereich bezeichnet werden.

Der Ziel-Programmcode 31 kann anhand von Metriken 32 auf seine Güte bewertet werden. Die Metriken 32 können Code-Qualitätsmetriken, Test-Qualitätsmetriken und/oder die Anzahl von Tests umfassen. Bei erfolgreicher Bewertung wird als Ausgabe 33 der Programmcode und seine Qualität oder Güte ausgegeben. Dieser Bereich des Computersystems 20 kann als Qualitätsbewertungsbereich bezeichnet werden.

Basierend auf der Bewertung kann eine Güte berechnet werden. Wenn mehrere Ziel-Programmcodes erzeugt worden sind, können die Lösungen dem Nutzer nach der Güte geordnet bereitgestellt werden.

Die Bewertung des Programmcodes kann zum Beispiel anhand von Code-Qualitätsmetriken wie zum Beispiel der Länge des Quellcodes, der Anzahl der Schleifen und oder der Verzweigungstiefe, Test-Qualitätsmetriken wie zum Beispiel der Branch coverage und/oder der Anzahl von verfügbaren oder durchgeführten Tests vorgenommen werden.

Fig. 3 zeigt den Fuzzer 28 in Detail sowie den Test-Harness 25, die Überprüfungs-Einheit 29 und den Programmcode 23 als Eingänge für den Fuzzer 28.

Für die gerichtete Fuzzing-Verifizierung oder -Prüfung umfasst der Fuzzer 28 die folgenden Teile. Ein Korpus 40 wird mit anfänglichen Testfällen aus den Code-Repositories (die übersetzt oder refaktorisiert werden) und/oder aus den bereitgestellten Tests und Test Harnesses gefüllt. Dazu ist der Korpus 40 mit dem Test-Harness 25 verbunden.

Warnorte oder Warnstellen 41 werden gespeichert und stellen den Zielort im Programmcode, den der Fuzzer 42 erreichen soll, zur Verfügung. Die Warnstellen 41 stammen von der Überprüfungs-Einheit 29.

Der Fuzzer 42 nimmt generierten Code als Eingabe, z. B. für die Instrumentierung. Dazu ist der Fuzzer 42 mit dem Test-Harness 25 verbunden. Die Hauptaufgabe des Fuzzers 42 besteht jedoch darin, Eingaben zu generieren und diese in eine ausführbare Datei 43 zu injizieren. Die kompilierte oder ausführbare Datei 43 wird aus dem Programmcode 23 erzeugt.

Eine Überwachungseinheit 44 misst oder überwacht die Abdeckung des Codes während der Laufzeit, in der Regel in einer Grey-Box-Einstellung. Dies wird dann in der Überwachungseinheit 44 gespeichert. Die Überwachung ist eine Sammlung von Laufzeitverhalten, wie z. B. die tatsächliche Laufzeit pro Testfall, und Ausgaben der ausführbaren Datei 43. All dies wird an den Fuzzer 42 zurückgegeben, um bessere Testfälle zu erzeugen.

Fig. 4 zeigt schematisch ein Computersystem 20, in dem die Techniken der vorliegenden Offenbarung zur Verifizierung statischer Warnungen eingesetzt werden können. Das Computersystem 20 kann dem Computersystem 20 aus Fig. 2 entsprechen. Das Computersystem 20 ist dafür ausgelegt, das Verfahren 10 gemäß Fig. 1 und das Verfahren 50 gemäß Fig. 5 auszuführen, insbesondere ist das Computersystem 20 aus Fig. 3 dafür ausgelegt das Trainings-Verfahren 50 gemäß Fig. 5 auszuführen. Das Computersystem 20 kann in Hard- und/oder Software realisiert sein. Entsprechend kann das in Fig. 3 gezeigte System als Computerprogramm angesehen werden, das dazu ausgelegt ist, das Verfahren 10 gemäß Fig. 1 und das Verfahren 50 gemäß Fig. 5 auszuführen.

In Fig. 4 wird ein Fehlerbehandlungsmechanismus des Computersystems 20 dargestellt. Falls kein Programmcode 31 ohne Fehler generiert werden kann, führt das in dem Fuzzer 28 zu einem Fehler. Entsprechend wird eine Meldung 34 zur Reduzierung des Vertrauens in die Übersetzung ausgegeben. Zudem wird in einem Fehlermodul 35 der Fehler sowie der zugehörige Programmcode 31 hinterlegt.

Aus dem Fehlermodul 35 wird als Information 36 der bisher beste Programmcode mit den noch existierenden Fehlern zu dem Sprachmodell 22 zurückgeführt, um damit einen besseren im Idealfall fehlerfreien Ziel-Programmcode zu generieren. Dies vermindert die Zuverlässigkeit und wird in der Qualitätsbestimmung berücksichtigt.

Optional kann sich dies nicht nur auf Fehler im Überprüfungsbereich beziehen, sondern analog auch auf Fehler im Qualitätsbewertungsbereich.

Fig. 5 ist ein Flussdiagramm, das ein Verfahren 50 zum Trainieren eines Sprachmodells illustriert. Das Sprachmodells ist eingerichtet zur automatisierten Generierung von Programmcode.

Zusammengefasst wird der durch das Sprachmodell erzeugte Code als Feedback an das Sprachmodell zurückgegeben, um eine neue Generation von Quellcode zu generieren. Die Idee ist, dass bereits passender (oder besserer) Code dann mit einer aktualisierten Eingabeaufforderung, die den neuen Code enthält, im Hinblick auf die Überwachungs- und Verhaltensausgabe feinabgestimmt werden kann. Wenn beispielsweise bereits guter Code nur an bestimmten Stellen Laufzeitprobleme aufweist, können diese Stellen in das Sprachmodell zurückgeführt werden.

In einem ersten Schritt des Verfahrens erfolgt ein Eingeben 51 des Ursprung-Programmcodes oder eines Source Codes in ein Sprachmodell und erzeugen eines Programmcodes. Das Sprachmodell kann bereits vortrainiert und gegebenenfalls auch schon fein abgestimmt sein. Alternativ kann auch mit einem neuen, untrainierten Sprachmodell gestartet werden. Das Trainieren basiert hier auf Reinforcement Learning. Das Trainieren geschieht in einer Trainingsumgebung zum Beispiel mit PPO (Proximal Policy Optimization).

Weiter erfolgt ein Verifizieren 52 des Programmcodes des prädiktiven Ziel-Programmcodes mittels des Verfahrens 10 wie zuvor anhand von Fig. 1 beschrieben.

Dann erfolgt ein Erzeugen 53 einer Belohnung für das Sprachmodell, wobei die Belohnung auf dem Bewerten der Warnstelle anhand des Verhaltens und der Ausgabe aus dem Verfahren 10 basiert. So kann eine niedrige Bewertung erfolgen, wenn die Warnstelle beim Fuzzing nicht erreicht wird und/oder wenn die Warnstelle beim Fuzzing erreicht wird aber dort kein Fehler gefunden wird. Eine hohe Bewertung kann erfolgen, wenn die Warnstelle beim Fuzzing erreicht wird und dort ein Fehler gefunden wird.

Schließlich erfolgt ein Aktualisieren 54 von Gewichten des Sprachmodells mit dem Wert der Belohnung. Das Resultat des Verfahrens ist ein Sprachmodell, das auf neuen ungelabelten Daten (hier zum Beispiel C-Code aus einer Motorsteuerung) besser trainiert ist, d.h. zuverlässigere Übersetzungen liefert.

Gemäß einer Ausführungsform umfasst das Verfahren weiterhin, dass die Belohnung approximiert wird durch Ausführung nur eines Tests der Tests des automatisierten Prüfens. Dies erlaubt eine Beschleunigung des Trainings.

## Patentansprüche

1. Verfahren (10) zur Verifizierung statischer Warnungen von mittels eines Sprachmodells (22) generiertem Code, mit den Schritten:
- Bereitstellen (11) einer ausführbaren Datei (43) aus einem Programmcode (23), der mittels eines Sprachmodells (22) generiert wurde,
- Bereitstellen (12) von Warnstellen (41) in dem Programmcode (23), die von statischen Tests stammen,
- Ausführen (13) von gerichtetem Fuzzing durch einen Fuzzer (28, 42), wobei der Fuzzer (28, 42) Eingaben in die ausführbare Datei (43) injiziert, um eine Warnstelle zu erreichen,
- Überwachen (14) des Verhaltens und der Ausgabe der ausführbaren Datei (43),
- Bewerten (15) der Warnstelle anhand des Verhaltens und der Ausgabe.

2. Verfahren (10) gemäß Anspruch 1, wobei der Programmcode (23) für gerichtetes Fuzzing instrumentiert wird.

3. Verfahren (10) gemäß Anspruch 1 oder 2, wobei ein Korpus (40) mit Eingaben für den Fuzzer (28, 42) bereitgestellt wird, der anfängliche Testfälle aus Code-Repositories des Programmcodes (23) und/oder aus bereitgestellten Tests und Test Harnesses enthält.

4. Verfahren (10) gemäß einem der Ansprüche 1 bis 3, wobei das Verhalten des der ausführbaren Datei (43) die tatsächliche Laufzeit pro Testfall umfasst.

5. Verfahren (10) gemäß einem der Ansprüche 1 bis 4, wobei eine niedrige Bewertung erfolgt, wenn die Warnstelle beim Fuzzing nicht erreicht wird und/oder wenn die Warnstelle beim Fuzzing erreicht wird aber dort kein Fehler gefunden wird, wobei eine hohe Bewertung erfolgt, wenn die Warnstelle beim Fuzzing erreicht wird und dort ein Fehler gefunden wird.

6. Verfahren (10) gemäß einem der Ansprüche 1 bis 5, wobei der Programmcode (31) ausgegeben wird, wenn das Überwachen (14) keine Anomalien ergeben hat, und wobei anderenfalls eine Ausgabe erzeugt wird, die statische Prüfwarnungen mit der Bewertung umfasst.

7. Verfahren (10) gemäß einem der Ansprüche 1 bis 6, wobei das Verhalten der ausführbaren Datei (43), die Ausgabe der ausführbaren Datei (43) und/oder die Bewertung der Warnstelle an den Fuzzer (28, 42) zurückgeführt wird.

8. Verfahren (10) gemäß einem der Ansprüche 1 bis 7, wobei der Programmcode (23) oder Teile des Programmcodes (23) unter Verwendung des Verhaltens des Programmcodes (23), der Ausgabe des Programmcodes (23) und/oder der Bewertung der Warnstelle aktualisiert wird und wobei der aktualisierte Programmcode optional als Eingabe für das Sprachmodell (22) zurückgeführt wird.

9. Verfahren (50) zum Trainieren eines Sprachmodells (22) eingerichtet zur automatisierten Generierung von Programmcode (23, 31), mit den Schritten:
- Eingeben (51) eines Source-Codes in ein Sprachmodell (22) und erzeugen eines Programmcodes (23),
- Verifizieren (52) des Programmcodes (23) mit dem Verfahren (10) gemäß einem der Ansprüche 1 bis 8,
- Erzeugen (53) einer Belohnung für das Sprachmodell (22), wobei die Belohnung auf dem Bewerten (15) der Warnstelle anhand des Verhaltens und der Ausgabe basiert,
- Aktualisieren (54) von Gewichten des Sprachmodells mit dem Wert der Belohnung.

10. Verfahren (50) gemäß Anspruch 9, wobei die Belohnung approximiert wird durch Ausführung nur einer Verifizierung.

11. Computersystem (20), dafür ausgelegt, das Verfahren (10; 50) gemäß einem der Ansprüche 1 bis 10 auszuführen.

12. Computerprogramm, das dazu ausgelegt ist, das Verfahren (10; 50) gemäß einem der Ansprüche 1 bis 10 auszuführen.

13. Computerlesbares Medium oder Signal, das das Computerprogramm gemäß Anspruch 12 speichert und/oder enthält.
